# FASCICULE DE BREVET EUROPEEN

(11) **EP 2 976 251 B1**
(45) Date de publication et mention de la délivrance du brevet: **28.12.2016**
(21) Numéro de dépôt: 14710028.3
(22) Date de dépôt: 17.02.2014
(51) Int. Cl.: B62D 21/15

(54) **STRUCTURE DE L'AVANT DE LA CAISSE D'UN VEHICULE AUTOMOBILE COMPORTANT DEUX BRANCARDS DONT L'AVANT PEUT PIVOTER EN CAS DE CHOC FRONTAL**
STRUKTUR DES VORDEREN TEILS DER KAROSSERIE EINES KRAFTFAHRZEUGS MIT ZWEISEITIGEN ELEMENTEN, DEREN EINE VORDERSEITE IM FALL EINES AUFPRALLS SCHWENKBAR IST
STRUCTURE OF THE FRONT OF THE BODY OF A MOTOR VEHICLE COMPRISING TWO SIDE MEMBERS, THE FRONT ONE OF WHICH IS PIVOTABLE IN THE EVENT OF A FRONTAL IMPACT

(30) Priorité: 20.03.2013 FR 1352491
(43) Date de publication de la demande: 27.01.2016
(73) Titulaire: PSA Peugeot Citroën Automobiles S.A., 78140 Velizy Villacoublay (FR)
(72) Inventeur: NORREEL, Franck, F-90120 Mezire (FR); PLUCHAUD, Eric, 25260 Montenois (FR)
(74) Mandataire: Fosse, Danièle
(86) Numéro de dépôt international: PCT/FR2014/050330
(87) Numéro de publication internationale: WO 2014/147309

(56) Documents cités:
- WO-A1-2010/089489
- FR-A1- 2 676 407
- FR-A1- 2 855 805

## Description

La présente invention concerne la structure de l'avant de la caisse d'un véhicule automobile.

La structure de l'avant de la caisse d'un véhicule automobile comprend généralement deux brancards en tôle d'acier ou d'aluminium portant chacun à son extrémité avant une platine sur laquelle est fixée un absorbeur de choc frontal. Une telle structure est décrite par exemple dans WO2010/089489.

Lors d'un choc frontal, l'absorbeur de choc se comprime mais reste attaché à l'extrémité du brancard.

Après le choc, il subsiste une partie incompressible de longueur comprise entre 50 et 60 mm qui réduit l'enfoncement global de la structure avant de la caisse et augmente le recul de l'arrière du brancard et l'intrusion de celui-ci dans l'habitacle.

Le but de la présente invention est de remédier à ces inconvénients.

Ce but est atteint, selon l'invention, grâce à une structure de l'avant de la caisse d'un véhicule automobile comprenant deux brancards portant chacun à son extrémité avant une platine sur laquelle est fixée un absorbeur de choc frontal, caractérisée en ce que chacun de ces deux brancards comporte près de son extrémité avant sur sa face latérale adjacente à l'espace compris entre les deux brancards une zone de moindre résistance, de telle sorte que cette zone puisse forcer la rotation de l'extrémité du brancard vers ledit espace en cas de choc frontal.

Ainsi, lors du choc frontal, la zone de moindre résistance du brancard permet d'amorcer immédiatement la rotation de l'extrémité du brancard et de l'absorbeur de choc porté par cette extrémité.

Lors de cette rotation, les vis de fixation de l'absorbeur sur la platine du brancard sont soumises à des efforts de cisaillement entraînant la rupture de ces vis et le détachement de l'absorbeur.

Le détachement de l'absorbeur permet de réduire la partie incompressible évoquée plus haut et l'enfoncement du brancard dans l'habitacle.

De préférence, la zone de moindre résistance du brancard est une zone emboutie.

Dans un mode de réalisation particulièrement simple et efficace de l'invention, la zone emboutie est une gorge emboutie s'étendant perpendiculairement à la longueur du brancard.

Cette gorge emboutie permet d'amorcer la rotation de l'extrémité du brancard, suivant l'axe de cette gorge, c'est-à-dire suivant un axe vertical.

La gorge ci-dessus peut avoir une section transversale en forme de V.

De préférence également, ladite gorge emboutie s'étend sur une longueur au moins égale à la moitié de la hauteur de ladite face latérale du brancard.

Selon une particularité avantageuse de l'invention, l'absorbeur de choc est fixé sur ladite platine au moyen de vis cisaillables sous l'effort engendré lors de la rotation de l'extrémité du brancard en cas de choc frontal.

Dans une variante de l'invention, ladite platine est reliée à l'extrémité du brancard par une liaison fusible sous l'effort engendré lors de la rotation de l'extrémité du brancard en cas de choc frontal.

D'autres particularités et avantages de l'invention apparaîtront encore tout au long de la description ci-après.

Aux dessins annexés, donnés à titre d'exemples, non limitatifs :
- la figure 1 est une vue en perspective d'un brancard d'une structure de l'avant de la caisse d'un véhicule automobile,
- la figure 2 est une vue de dessus du brancard représenté sur la figure 1,
- les figures 3, 5 et 7 sont des vues de dessus montrant les déformations subies par l'absorbeur et le brancard d'une structure connue, lors des phases successives d'un choc frontal,
- les figures 4, 6 et 8 sont des vues de dessus montrant les déformations subies par l'absorbeur et le brancard d'une structure selon l'invention, lors des phases successives d'un choc frontal.

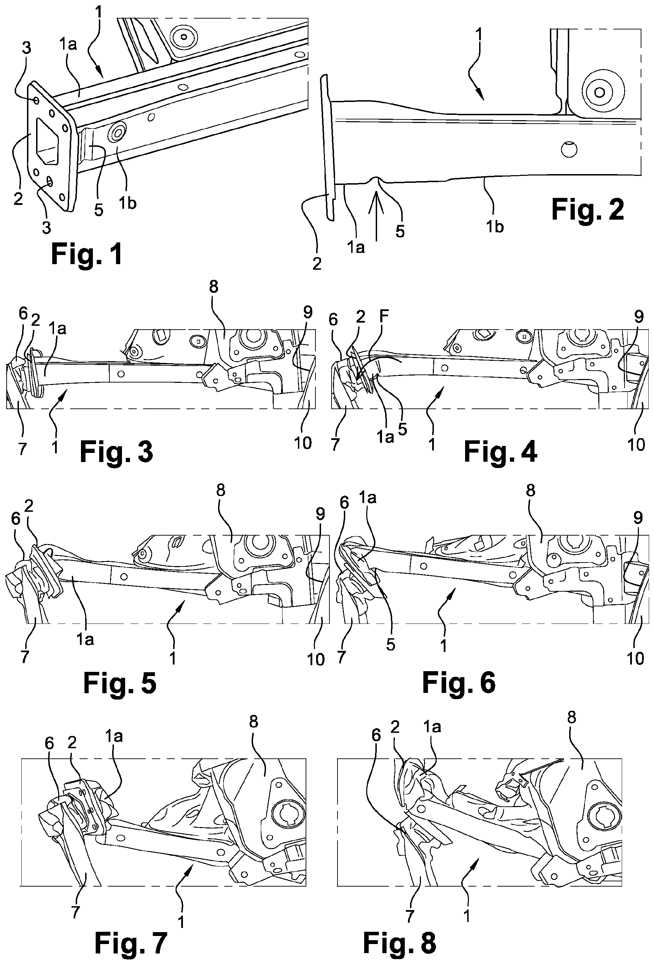

Les figures 1 et 2 représentent l'un des deux brancards 1 d'une structure avant de caisse selon l'invention.

Ce brancard 1 est de façon connue constitué par un corps creux en tôle d'acier ou d'aluminium de section transversale sensiblement rectangulaire.

Le brancard 1 porte à son extrémité avant 1a une platine en acier 2 sur laquelle peut être fixée un absorbeur de choc non représenté sur les figures 1 et 2.

A cet effet, la platine 2 comporte des trous 3 pour le passage des vis de fixation de l'absorbeur de choc.

Conformément à l'invention, chacun des deux brancards 1 comporte près de son extrémité avant 1a sur sa face latérale 1b adjacente à l'espace 4 compris entre les deux brancards 1 une zone 5 de moindre résistance, de telle sorte que cette zone 5 puisse forcer la rotation de l'extrémité 1 a du brancard 1 vers ledit espace 4 en cas de choc frontal, comme on l'expliquera plus en détail plus loin.

Dans l'exemple représenté, la zone 5 de moindre résistance est une zone emboutie sous forme de gorge de section transversale sensiblement en V.

Cette zone emboutie 5 en forme de gorge s'étend perpendiculairement à la longueur du brancard 1, c'est-à-dire suivant un axe vertical.

Cette gorge emboutie 5 s'étend sur une longueur au moins égale à la moitié de la hauteur de la face latérale 1 b du brancard 1, comme montré sur la figure 1.

Par ailleurs, l'absorbeur de choc est fixé sur la platine 2 portée par l'extrémité du brancard 1 au moyen de vis cisaillables sous l'effort engendré lors de la rotation de l'extrémité du brancard 1 en cas de choc frontal.

Les figures 3 à 8 montrent les phases successives d'un choc frontal exercé sur la structure avant de la caisse d'un véhicule automobile.

Les figures 3, 5 et 7 concernent une structure connue tandis que les figures 4, 6 et 8 concernent une structure comportant des brancards modifiés selon l'invention.

Ainsi, le brancard 1 représenté sur les figures 4, 6 et 8 comporte une gorge emboutie 5, comme montré sur les figures 1 et 2.

L'ensemble des figures 3 à 8 montre également la platine 2 fixée à l'extrémité 1a du brancard 1, l'absorbeur de choc 6 fixé sur cette platine 2 au moyen de vis et la traverse 7 qui relie l'avant de l'absorbeur 6 à un autre absorbeur non visible fixé à l'extrémité du second brancard.

Par ailleurs, les figures 3 à 8 montrent également le support 8 de la suspension avant situé à l'arrière du brancard et le tablier 9 qui sépare l'avant du véhicule de l'habitacle 10.

Au début d'un choc frontal, dans le cas de la structure connue (voir figure 3) comme dans le cas de l'invention (voir figure 4), l'absorbeur de choc est comprimé.

Contrairement au brancard 1 de la structure connue, l'avant 1 a du brancard 1 selon l'invention commence à pivoter dans le sens de la flèche F vers l'espace 4 situé entre les deux brancards, grâce à la gorge emboutie 5.

Dans la phase suivante, l'extrémité 1a du brancard de la structure connue (voir figure 5) reste dans l'alignement du reste du brancard, tandis que dans le cas de la structure selon l'invention (voir figure 6) le pivotement de l'extrémité 1a du brancard s'est accentué.

Lors de ce pivotement, les vis de fixation de l'absorbeur 6 sur la platine 2 subissent des efforts de cisaillement qui entraîne leur rupture.

La rupture des vis s'accompagne d'un glissement de l'absorbeur 6 sur la platine 2 du brancard (voir figure 6).

Ce glissement entraîne un échappement de l'absorbeur 6 par rapport à la platine 2 (voir figure 8).

Dans le cas de la structure connue (voir figures 5 et 7) il n'y a pas de rupture des vis de fixation de l'absorbeur 6 à la platine 2 ni glissement et échappement de l'absorbeur 6.

L'échappement en fin de choc de l'ensemble absorbeurs et traverse avant 7 qui relie entre eux les deux absorbeurs entraîne une réduction considérable des intrusions de l'arrière des brancards 1 dans l'habitacle 10 et une amélioration de la loi de décélération, c'est-à-dire de l'énergie absorbée lors du choc.

Dans une variante de l'invention, la platine est fixée à l'extrémité 1a du brancard 1 par des liaisons fusibles sous l'effort engendré lors de la rotation de l'extrémité 1 a du brancard 1, en cas de choc frontal.

La rupture de ces liaisons permet, comme dans le cas décrit plus haut, à l'extrémité 1 a du brancard de se déplacer par rapport à la platine et de limiter ainsi les risques d'intrusion dans l'habitacle.

## Revendications

1. Structure de l'avant de la caisse d'un véhicule automobile comprenant deux brancards (1) portant chacun à son extrémité avant (1a) une platine (2) sur laquelle est fixée un absorbeur de choc frontal, **caractérisée en ce que** chacun de ces deux brancards (1) comporte près de son extrémité avant (1a) sur sa face latérale (1b) adjacente à l'espace (4) compris entre les deux brancards (1) une zone de moindre résistance (5), de telle sorte que cette zone (5) puisse forcer la rotation de l'extrémité (1a) du brancard (1) vers ledit espace (4) en cas de choc frontal.

2. Structure de l'avant de la caisse selon la revendication 1, **caractérisée en ce que** ladite zone (5) de moindre résistance est une zone emboutie sur ladite face latérale (1 b).

3. Structure de l'avant de la caisse selon la revendication 2, **caractérisée en ce que** la zone emboutie (5) est une gorge emboutie s'étendant perpendiculairement à la longueur du brancard (1).

4. Structure de l'avant de la caisse selon la revendication 3, **caractérisée en ce que** la section transversale de ladite gorge (5) est sensiblement en V.

5. Structure de l'avant de la caisse selon l'une des revendications 3 ou 4, **caractérisée en ce que** ladite gorge emboutie (5) s'étend sur une longueur au moins égale à la moitié de la hauteur de ladite face latérale (1 b) du brancard (1).

6. Structure de l'avant de la caisse selon l'une des revendications 1 à 5, **caractérisée en ce que** l'absorbeur de choc (6) est fixé sur ladite platine (2) au moyen de vis cisaillables sous l'effort engendré lors de la rotation de l'extrémité (1a) du brancard en cas de choc frontal.

7. Structure de l'avant de la caisse selon l'une des revendications 1 à 5, **caractérisée en ce que** ladite platine (2) est reliée à l'extrémité (1 a) du brancard (1) par une liaison fusible sous l'effort engendré lors de la rotation de l'extrémité (1a) du brancard en cas de choc frontal.

## Patentansprüche

1. Struktur der Vorderseite der Karosserie eines Kraftfahrzeugs, umfassend zwei Längsträger (1), die jeweils an ihrem vorderen Ende (1a) eine Platte (2) tragen, auf der ein vorderer Stoßdämpfer fixiert ist, **dadurch gekennzeichnet, dass** jeder dieser zwei Querträger (1) nahe seinem vorderen Ende (1a), auf seiner Seitenfläche (1b), benachbart dem Raum (4), der zwischen den zwei Querträgern (1) enthalten ist, einen Bereich von geringerem Widerstand (5) umfasst, so dass dieser Bereich (5) die Drehung des Endes (1a) des Querträgers (1) hin zu dem Raum (4) im Fall eines frontalen Zusammenstoßes erzwingen kann.

2. Struktur der Vorderseite der Karosserie nach Anspruch 1, **dadurch gekennzeichnet, dass** der Bereich (5) von geringerem Widerstand ein Bereich ist, der auf der seitlichen Fläche (1b) tiefgezogen ist.

3. Struktur der Vorderseite der Karosserie nach Anspruch 2, **dadurch gekennzeichnet, dass** der tiefgezogene Bereich (5) eine tiefgezogene Auskehlung ist, die sich senkrecht entlang des Querträgers (1) erstreckt.

4. Struktur der Vorderseite der Karosserie nach Anspruch 3, **dadurch gekennzeichnet, dass** der Querschnitt der Auskehlung (5) im Wesentlichen V-förmig ist.

5. Struktur der Vorderseite der Karosserie nach einem der Ansprüche 3 oder 4, **dadurch gekennzeichnet, dass** sich die tiefgezogene Auskehlung (5) auf einer Länge von mindestens gleich der Hälfte der Höhe der seitlichen Fläche (1b) des Querträgers (1) erstreckt.

6. Struktur der Vorderseite der Karosserie nach einem der Ansprüche 1 bis 5, **dadurch gekennzeichnet, dass** der Stoßdämpfer (6) auf der Platte (2) mit Hilfe von abscherbaren Schrauben unter der Beanspruchung fixiert ist, die bei der Drehung des Endes (1a) des Querträgers im Fall eines frontalen Zusammenstoßes erzeugt wird.

7. Struktur der Vorderseite der Karosserie nach einem der Ansprüche 1 bis 5, **dadurch gekennzeichnet, dass** die Platte (2) mit dem Ende (1a) des Querträgers (1) durch eine Verbindung verbunden ist, die unter der Beanspruchung, die bei der Drehung des Endes (1a) des Querträgers im Fall eines frontalen Zusammenstoßes erzeugt wird, schmelzbar ist.

## Claims

1. Structure of the front of the body of a motor vehicle, comprising two beams (1) each carrying at its front end (1a) a plate (2) to which a front shock absorber is fixed, **characterised in that** each of these two beams (1) comprises, close to its front end (1a) on its lateral face (1b) adjacent to the space (4) lying between the two beams (1), a zone of least resistance (5), so that this zone (5) can force the rotation of the end (1a) of the beam (1) towards the space (4) in the event of front impact.

2. Structure of the front of the body according to claim 1, **characterised in that** said zone (5) of least resistance is a zone stamped on said lateral face (1b).

3. Structure of the front of the body according to claim 2, **characterised in that** the stamped zone (5) is a stamped groove extending perpendicular to the length of the beam (1).

4. Structure of the front of the body according to claim 3, **characterised in that** the cross section of said groove (5) is substantially in a V shape.

5. Structure of the front of the body according to one of claims 3 or 4, **characterised in that** said stamped groove (5) extends over a length at least equal to half the height of said lateral face (1b) of the beam (1).

6. Structure of the front of the body according to one of claims 1 to 5, **characterised in that** the shock absorber (6) is fixed to said plate (2) by means of screws that can be sheared under the force generated during rotation of the end (1a) of the beam in the event of front impact.

7. Structure of the front of the body according to one of claims 1 to 5, **characterised in that** said plate (2) is connected to the end (1a) of the beam (1) by a connection that is fusible under the force generated during the rotation of the end (1a) of the beam in the event of front impact.
